Europäisches Patentamt

European Patent Office

Office européen des brevets

⑩

(11) Publication number: **0 233 910**

**B1**

(12) **EUROPEAN PATENT SPECIFICATION**

(45) Date of publication of patent specification: **19.09.90**

(21) Application number: **86904906.4**

(22) Date of filing: **16.07.86**

(86) International application number:
**PCT/HU86/00044**

(87) International publication number:
**WO 87/00400 29.01.87 Gazette 87/03**

(51) Int. Cl.⁵: **A 01 N 25/22**

(54) **PLANT PROTECTING COMPOSITION.**

(30) Priority: **16.07.85 HU 271885**

(43) Date of publication of application:
**02.09.87 Bulletin 87/36**

(45) Publication of the grant of the patent:
**19.09.90 Bulletin 90/38**

(84) Designated Contracting States:
**AT CH DE FR GB IT LI**

(56) References cited:
**DE-A-2 105 174**
**DE-A-3 304 457**
**FR-A-2 502 054**
**GB-A-1 354 298**
**US-A-3 660 071**
**US-A-4 105 793**
**US-A-4 329 360**

(73) Proprietor: **INNOFINANCE Altalános Innovácios Pénzintézet**
**Szabadság tér 5-6**
**H-1054 Budapest V (HU)**

(72) Inventor: **ODOR, Zoltán**
**Bimbó ut 108**
**H-1022 Budapest (HU)**

(74) Representative: **Dipl.-Ing. Schwabe, Dr. Dr. Sandmair, Dr. Marx**
**Stuntzstrasse 16**
**D-8000 München 80 (DE)**

Courier Press, Leamington Spa, England.

## Description

### Technical field

The present invention relates to a process for preparing a substance for treating and/or preventing plant diseases or regulating the growth of plants, as well as to compositions containing the substance.

### Background art

Certain phytoparasitic insects are symbion with tissue parasitic fungi, e.g. Einarmonia formoson with the fungus Cytospora cincta, or the clearwing moths with the fungi Croptosporioptis malicorticis or Sphacropsis malorum. Other examples of such association are as follows:

Bark beetles/Scolitideae/and the fungus Pacidiella discolor,

Wood weavils/Hulobuis abietis/and different woodrotting and Cytospora fungi,

Apple clearwing/Sunantedon myoaefomis/and fungus Sphaeropsis malorum.

Bark beetle/Scoytus/causing the destruction of white alm and the fungus Graphium ulmi.

While laying eggs, the insect can also get the spores or living mycelia of parasitic fungi to the plant by its legs or excrement. Some parasitic fungi start their vital functions in places fret by the insect, in the phloem layers.

In case of shrubby trees, the plant pathogenic fungus penetrates into the xylem, the phloem and finally into the woody part of the plant. The vital functions of the fungus develop already at 0°C. The eggs of pathogenic insects laid on the fret or wounded plant surface hatch in a few weeks. The worms penetrate into the plant tissues and the bark, resp., and live there until their total development. The life conditions thereof can be facilitated by the presence of parasitic fungi brought in at the time of laying eggs, as the protein needs of the grub will be covered by the matured fungus. As a consequence, a malign process is initiated in the plant tissue. The formation of dead tissues is promoted by the grub destroying the tissues responsible for the fluid transport, thus, disturbing the fluid supply.

The insect lives in the bark as worm through the winter and metamorphoses to nymph in the spring or early summer. Afterwards the lower part of nymph gest extruded from the loose tissue and the imago emerges. After fertilization the imago returns to the same malign plant part or to other freshly wounded surfaces to lay the new eggs, thus, again introducing the spores and mycelia of the symbion, parasitic fungi and the circulation will go on.

Different effects may cause plant injuries, like frost damages, bark etoliations caused by the sun, fractions caused by snow, ice, cultivating tools, vibrators, etc., open wounds, bites of animals, damages by insects living in the plant tissues or open wounds caused by pruning. Malign surface injuries caused by fungi should also be considered. These "open doors" provide an easy way for insects and parasitic fungi to penetrate into the plant and thus, to set the above circulation into motion.

At certain strains, e.g. current clearwing/Synanthedon tpuliformis/the infection can be promoted if the imago does not fly right after leaving the nymph "capsule" but copulates in a few hours and lays eggs immediately, usually at the area of "flight slit". The worms start to fret at the slit and penetrate into the inside of cane and destroy greater and greater area therein. Accordingly, the living time of the imago on the surface is very short, and in in vivo protection is hardly useful. In case of the aforesaid plant the only way of protection has been the removal and burning of canes.

In case of white elm the bark beetle is in permanent moving within the hadrome. Due to the rapid growth of Graphium ulmi the fluid transportation vessels will be blocked, thus, resulting in a partial or total etiolation of the tree. The only way of defence has been felling and total burning of the tree.

The above complex fungus-insect damages can be observed in cultures of potato, oil-seed plants, like sunflower, cereals and vineyards. For example, oil-seed plants, like sunflower, cereals and vinyeyards. For example, powdery mildew, blust and block-rust occurs in cereal cultures together with the damages caused by the "whitening beetle".

A large number of broad-spectrum insecticides and fungicides have already been used against injury-parasitic fungi and the insects living in symbiosis therewith.

The known non-systemic insecticides possessed, however, surface activity only, i.e. their effect was limited only to controlling the imago or butterfly being in no contact with the plant. The effect on the parasitic fungi in symbiosis with the imago was of the same type.

In spite of the wide use of insecticides and fungicides, the diffusion of many plant diseases could not be controlled. For example, the phloem and bark destructive insects have spread over the temperature zone and caused substantial economic damages in American and European countries, e.g. by leading to the destruction of primeval white alms, etc.

### Disclosure of invention

The present invention provides a process for preparing a substance for the treatment of plants, characterized by contacting one or more active compound for plant treatment (in the following active substance) with alkyl methacrylate, preferqbly methyl methacrylate, by the aid of energy transmission, in the presence of a cross-linking inhibiting agent (inhibitor).

By using the process according to the invention, compositions for the treatment and/or prevention of plant diseases, the regulation of plant growth and/or enhancing the ion supply of plants and/or repellants may be obtained.

As active material, fungicides, insecticides, nematocides, acaricides, bactericides and/or antiviral chemical compounds may be used.

Examples of insecticidal active compounds are as follows: chlorinated hydrocarbons, phosphonic acid esters, phosphoric acid esters, thiophosphoric acid esters, dithiophosphoric acid esters, salycilic acid esters, thiolderivatives, carbamates and/or pyrethroids or compounds of other structure. Preferred active compounds are as listed herebelow: Endosulfan, Dienochlor, Kelevan, Lindan, Toxaphen, Butonate, Dichlorvos, Fonofos, Phosphamidon, Heptenophos, Chlorfenvinphos, Mevinphos, Monocrotophos, Trichlorfon, Bromphos, Diazinon, Phenitrothion, Fenthion, Chinalfos, Chlorpiriphos, Tetrachlorvinphos, Methylparathion, Pirimiphos-methyl, Triazophos, Dimethoat, Phenthoat, Phormothion, Phosalone, Phosmet, Malathion, Metidathion, Methylaziphos, Prothoat, Sulfotepp, Terbuphos, Phorate, Thiometon, Aldicarb, Dioxacarb, Carbaryl, Carbofuran, Merceptodimethur, Methomyl, Oxamyl, Pirimicarb, Bioresmetrin, Zipermetrin, Deltametrin, Phenvalerate, Phtalthrin, Tetrametrin, Pirothrin, Neopyramin, Pormothrin, DNOC, kartap, Purimiphos-methyl, Terbuphos, Dazomet, Diflubenzuron, Thiocyclam, Propoxur, Fenazox, Hetamidophos, Pirimicarb, Methylparathion and the analogues thereof.

As acaricide, e.g. 44-dichlorobenzyl acid isopropyl ester, Dinobuton, Tetrasul, Formothion, Dimethoate, Thiometan, Malathion, Phosphothion, Fenthion, Tetradiphon, Zihexathin Fenbutatin oxide, Chlorpropylate, Amitrase may be used, preferably in a concentration of 0.015 to 0.2% by weight.

As plant growth regulating agent, e.g. one or more compound selected from the group consisting of beta-indolylbutyric acid, alfanaphthyl acetic acid, etaphon and N-phenyl phthalamic acid may be used.

As fungicide, both the systemic and non-systemic fungicidal compounds may be used: the penetration of the compounds is provided by the substance obtained by the ineraction with the alkyl methacrylate and inhibitor.

The fungicides may be selected from the following groups of organic compounds: phtalimide derivatives, dithiocarbamates, disulfides, heterocyclic compounds, preferably benzimidazol derivatives, triazines, e.g. benzimidazol- or triazyl-derivatives, copper- and sulphur-based fungicides, cyanoacetic acid derivatives or the mixtures thereof.

Preferred and commercially available fungicides are listed herebelow: Zineb, Maneb, Mankozeb, Metiram, Metam, Propineb, TMTD, Ditalmimphos, Folpet, Captafol, Captan, Bitertanol, Benomyl, Bupirimat, 4-butyl-4H-1,2,4-triazine, Dichlorbutrazol, Dithianon, Dodemorph, Ethirimol, Fenarimol, Fuberidazole, Hymexazol, Fprodion, Carbendazim, Carboxin, Chinomethionat, Nuarimol, 8-oxi-chinolin-sulphate, Pirazophos, Procymidon, copper-oxyquinolate, Triadimephon, Triadimenol, Tridemorph, Triphorin, Vinchlozolin, Zymoxanyl, Dichlofluanid, Dinocap, Dodine, Ephosite-Al, Fentin acetate, Fentin hidroxide, Chlorothalonil, Methalaxyl, Nitrothal-isopropyl, Polyoxyin-B, Thiophanate-methyl, Dodemorph, Bitertanol, Triadimenol, Ephasit, Chlorothalonil, Mantozeb, Dichlofluanid, Captan, Malathion, Dithalimphos, Dichlobutrazol or the mixture of any of the above compositions or the analogs thereof.

According to the invention the preferred inhibitors may be the hydroquinone, hydroquinone-derivatives, ascorbic acid, phenol and phenol derivatives. These compounds, besides inhibiting the non-desired polymerization of the alkyl methacrylate, also posses a certain bacteriostatic effect.

The energy transmission is accomplished by heat treatment, UV or laser irradiation, preferably under stirring.

If the energy transmission is carried out by heat treatment, the active compound, the alkyl methacrylate and inhibitor are mixed and warmed up to 100 to 130°C. The treatment is carried out preferably for 0.5 to 3 hours.

According to another embodiment of the invention, the mixture of alkyl methacrylate, the active compound and inhibitor is treated by UV irradiation for 5 to 60 minutes at 10 to 20°C, preferably under cooling. For this purpose, a quartz sound provided with a cooler and a quartz bulb working in the range of 300 to 500 nm (3000 to 5000 Å) is placed into the reactor. In this case the stirring is accomplished with an inert gas, preferably nitrogen or carbon dioxide. By working without cooling, the reaction temperature will raise to about 80°C.

According to another embodiment of the invention, the mixture of alkyl methacrylate, the active compound and inhibitor are treated by laser irradiation. For example in photochemical reactor, under strong water cooling and nitrogen stirring and using argon-ion 488 nm line at a performance of 1 W the reaction takes place in 2 to 3 hours. By using an apparatus of 4 W performance (6 laser lines enter the reaction area together) the reaction time decreases to 30 to 40 minutes. This reaction mode eliminates the need of heat energy and the reaction can safely be controlled.

According to the invention the preferred ratio of the reactants is 0.9 to 10 parts by weight of liquid alkyl methacrylate monomer and 0.8 to 10 parts by weight of inhibitor to 1 part by weight of active compound.

The process according to the invention provides a product by using energy transmission and known starting material, which has not been known and which can effectively be used as active ingredient plant protecting chemicals.

The object of the present invention is also a composition which contains the substance prepared from the active compound the alkyl methacrylate and inhibitor by energy transmission, and 0.001 to 5% by weight of emulsifier, wetting agent and other auxiliaries.

The emulsifier is used preferably in the amount of 0.1 to 5% by weight. Examples of the emulsifiers ar the tallow fat, ethoxylated fatty alcohol sulfonate tetramine/25 EtO/alkylphenol-hatethox/ fatty alcohol sulfonate, 22 EtO/, casein.

As wetting agent, propyleneglycol, polyethylene glycol or glycovet may be used. The use of 0.001 to 0.01% by weight of wetting agent is sufficient.

By mixing the above product with carriers and diluants, resp., composition ready for use is obtained. For this purpose, water in the form of 0.2 to 10% by weight emulsion may be used.

Another object of the invention is the use and mode of application of the above compositions on damaged plant with curative effect or on healthy plants as preventive composition.

The compositions may be formulated e.g. in form of a paste, viscous solution or aqueous dilutions (such as spray).

As additive, pigments or pigment-containing materials may also be added to the compositions, if labelling is needed. Such additives are e.g. the indatene derivatives, which are then degraded when exposed to UV light.

The biological activity of the compositions according to the invention has been tested and established against plant diseases caused by different insects and fungi. Such diseases include, e.g. the following:

branch carcinoma caused by Enarmonia formoson and the fungus Cytospora ciucta on apricot and peach,

carcinoma caused by bark bettle (Schytus) and the fungus Phaciodella discolor on peer and apple trees,

"black carcinoma" caused by clearwing (Synathedon mypaefonis) and Sphaeropsis malorum on apple and pear,

carcinoma caused by Nectria galligensa on pear and apple trees.

The compositions according to the invention are especially effective against the grape-destructive fungus Entypa and different fungi of the genus Cytosporina, which have an important effect especially during the cordon cultivation.

The use of the compositions according to the invention on vine, e.g. may be accomplished as follows:

The essential requirement of protection is to eliminate the centres of infection. The shoots cut off and the decayed stocks should be removed from the vineyard and burned. The stock feeding the cordon possesses at least partly a decayed surface which makes the growth of fungi possible. The matured fungi form cellulose which swell by the effect of rain and push out the spores. These spores are carried by the wind, insects and rain. As the above function is provided by the spring rains, the spores precipitate on the pruning wounds of cordon vine wherein the ideal conditions of fungus growth are provided. The protection should be accomplished on the following grounds:

1) The stock should be sprayed with an aqueous emulsion of the composition according to the invention (silicon-containing spray is preferred). Consequently, the active ingredient kills the mycelia and spores of the fungi, while the silicon makes the stock hydrophobic and prevents the permeation of water to the sporangine thus they become unable to swell the push out the spores.

2) After pruning, the cordon should be sprayed with a composition according to the invention containing a fungicide and an insecticide which is effective against Enarmonia formoson, thus stopping the "guttation" of the stub.

In case of infected cordons "washing sprinkling" should be used in the spring or fall with an aqueous form of the composition according to the invention, preferably with a 20% dilution. When using "washing sprinkling" after pruning the "guttation" and accordingly the secondary fungus infection will be eliminated.

The aqueous composition according to the present invention as spray on wound infections is recommended for the treatment of wounds made in winter or early spring. Spraying is preferred to perform at an average temperature of +5°C only. It has been provded that the wounds got cured and no injury occurred.

The composition according to the invention may be applied on the wounded area by any spraying apparatus. The said composition may also contain callus forming agent and insecticide of prolonged effect.

Spraying with an 5% solution of the composition according to the invention provides an effective protection. In case of aqueous solution 500 to 800 l/ha is efficient to apply. The application may be accomplished by means of sprayer provided with spraying gun or other conventional way. During treatment the spray should be directed to the pruning surface.

In certain cases (e.g. at strong Eutypa infection of vine) also the active material per se, without dilution with water can be sprayed.

Another mode of use of the compositions is the dressing. For this purpose the active ingredient should preferably be used in 5—10% aqueous solution with casein as preferred auxiliary on cereals, corn and onion. The use of casein is not absolutely necessary.

In case of tuber crops the time of dressing is 1 to 10 minutes. Cereals may be treated in conventional dressing apparatuses. For this purpose, emulsions of higher concentration (e.g. 40 to 60% by weight) can also be used. The addition of indicator (red) is preferred to the dressing emulsion.

The most effective protection is provided by the so-called "directed spraying". For this purpose both self-propelled and trailed sprayers can be applied.

In the dormancy period after regeneration the composition of the invention should be diluted at +5°C to 5% and sprayed by gun on the sawn or cut wound surface. This mode of treatment requires 400 to 600 ha/l of spray solution.

On infected apple trees the aqueous composition according to the invention may be applied in a dilution of 15 or in case of stronger infection 20%. The application can be performed by any appropriate sprayer, using 500 to 800 ml of aqueous solution.

If the trunk or flowers of the tree or the cordon part of vine were sprayed in the fall or early winter (November and December), the regular spring spraying may be eliminated.

It has been proved that the composition according to the invention penetrates as deep as 20 to 30 mm into the living tissues and kills the nymphs and grubs of bark- and phloem-destroying insects as well as the spores and mycelia of the parasitic fungi therein without causing any damage to the plant.

As comparison, the biological effects of the single components of the composition according to the invention have also be determined. It has been found that none of the active compound hydroquinone system, the methyl methacrylate-hydroquinone system and the active compound-methyl methacrylate system showed an effect comparable with that of the compositions according to the invention.

When omitting the hydroquinone, the active compound should have been kept suspended in the fluid monomer by continuous stirring in order to avoid sedimentation and discoloration. The thermal treatment of the active compound-hydroquinone system could only be performed in the presence of a solvent. For example, thermal treatment of Benomyl and hydroquinone in the presence of toluene yielded a mixture the biological activity of which did not exceed that of the active compound.

Best mode of carrying out the invention

The process according to the invention is illustrated by the following examples.

Example 1

1 part by weight of Chinalphos, 1 part by weight of Deltametrin followed by 1 part by weight of methyl methacrylate, 3 parts by weight of hydroquinone and 3 parts by weight of Benomyl were fed into a reactor provided with a stirrer, heated up to 110°C and then cooled. Lutazol® AT 25 emulsifier (tallow fatty alcohol ester, 25 EtO) followed by wetting agent containing 0.01% fluorocarboxylic acid (Likovet®, Hoechst) are added and the mixture was stirred, thus obtaining 9 kg of fluid dark brown product which can be filtered, if desired.

The solution thus obtained was sprayed on fruit trees, especially apple in an aqueous dilution of 0.5 to 1%. The composition can effectively be used against vegetative or parasitic fungal diseases and insects. The composition controls powdery mildew, peronospora, stubbing fungi, clearwing moths, lice and mites.

The same solution was applied without dilution on cordon cultivation vine in spring or fall by the aid of a special spraying apparatus or brush. It has been established that after treatment the cordons infected by Eutypa and Cytospora cincta showed an intensive sprouting and leafing as a sign of destruction of the pests. When placing a tissue sample taken from vine cordon tissue killed by Eutypa on growth medium, no growth of Eutypa and Cytospora cincta could be observed after 7 to 8 days. As a result of treatment, the larvae and eggs of clearwing moths, grape-berry moths and mites situated beneath the bark were killed. The tissues which remained intact before the treatment thickened by midsummer and the leaves on the cordon wall were also normal.

Example 2

Following the procedure of Example 1, 2 parts of methyl methacrylate, 2 parts of Benomyl, 2 parts of hydroquinone and 0.5 parts of Chinalphos were heated to 110°C under stirring. To the mixture 2 to 3% of polyvinyl butyrate coloured by 0.5% of sudan red were added.

After cooling the wetting agent according to Example 1 was added and the mixture was diluted with 5% of terpentine calculated on the total amount of the solution. The viscosity was adjusted to 60 to 70 cP by the addition of methyl methacrylate.

The solution thus obtained was applied to the surface of apple trees infected with clearwing and the fungi Cytospora cincta and Eutypa or Sphaeropsis malorum, resp., or to the bark of stone-fruit trees strongly infected with Enarmonia formoson, using a special sprayer. The surface of wounds was opened 20 minutes after treatment and dead larvae and nymphs were found.

Samples were taken from the tissues destructed by the parasitic fungi, placed on the surface of a medium, incubated and observed on the eighth day. No fungal growth could be observed on the medium. The cocons of the wooly aphids, scales and leaf-minor flies were killed and the eggs were dried. The same are resistant against regular plant protecting agents due to a wax layer on their surface which prevents the contact with the eggs. It has also been found that the adhesive layer binding the fibrine filaments which build up the cocon, was dissolved, thus destroying the structure.

Example 3

The product of Example 2 was completed with 4% by weight of quinine hydrochloride or quinine sulfate. The solution thus obtained was sprayed on the bark of young trees at the end of October or early November. It was found that the barks were not damaged by wild animals, especially rabbits during winter. The application on vine cordon, besides the effects as in Example 1, also prevented the damages of frost.

Example 4

1 part of Benomyl, 1 part of Chinalphos, 1 part of Deltametrine, 1,5 parts of hydroquinone and 3 parts of methyl methacrylate were stirred in a reactor at 105°C for one hour.

The mixture was allowed to cool to room temperature and Lutazol® AT 25 emulsifier and 0.01% of Likovet® wetting agent were mixed thereto. If desired, the dark brown solution was filtered. 1 to 2% of quinine hydrochloride was dissolved in the above system.

The 0.5 to 1% aqueous dilution of the above solution was applied on corn, young pine and budding vine. No damages caused by wild animals could be observed. The treatment also resulted in the destruction of insect eggs beneath the bark.

Example 5

The mixture of 75 g of Triadimephon, 100 g of Folpet, 100 g of hydroquinone, 3000 g of methyl methacrylate, 80 g of Chloropropylate, 100 g of Chinalphos and 100 g of Deltametrine was heated at 110°C for 1/2 hour. After cooling 1 to 5% of Lutazo® or lauryl sulfate emulsifier and 0.01% of Likovet® wetting agent were added. To the brownish solution 0.4% of trace element composition, e.g. "Wuxal" was added as a 1% solution.

0.4 to 0.5% aqueous dilution was prepared and applied on the surface of infected vine by conventional methods. After a few days the localization of powdery mildew and peronospora on the surface of leaves could be observed. In case of no infection at the time of treatment, a total protection was provided. The same effect could be observed against blue mold rot and insect pests.

Example 6

The active substance of Example 5 was prepared and after cooling, 20 mg of $B_1$ vitamin and 1 mg of alfa-naphthyl acetic acid were added. Before diluting with water, 0.01% of trace element composition was added (e.g. Mikomit®).

After spraying the composition on cordon leaf system the leaves turned to deep green. The leaf analysis showed that due to the increased trace element, especially iron and manganese content, the assimilation activity was enhanced, as the microelements penetrate in the deeper tissue layers. The increase of ion intake was also observed.

It is well-known that 80 to 90% of vine possess mechanically or biologically injured tissues. On the effect of cellulose degrading enzymes being present in the tissues which are activated by the injuries of the tissue, the viscosity of fluids increases becoming unable to keep the metal ions in solution. Thus, the ions needed for vegetation cannot be supplied by intake from the soil. The treatment according to this example ensures intake of fluids ions in the deeper tissue layers.

Example 7

The preparation and components of the active material were identical with those of Example 6. After cooling, when adding the emulsifier and wetting agent, 5 mg of gibberellic acid, 5 mg of beta-indolyl butyric acid and 10 mg of potassium hydrogen carbonate were also mixed to the solution. The composition was used as 0.5% aqueous dilution after mixing with 0.4% of trace element mixture.

By spraying 10 to 14 days before vine blooming the number of flowers increased by 30 to 40%.

Treatment with the same solution after blooming increased the number of knots by 70 to 80%.

The same treatment 14 days after blooming resulted as follows:

the ripening period shortened by 20 days,
the sugar content increased by 3 to 4%,
the amount of grains decreased by 25%.

The use of composition provided a permanent protection against peronospora, powdery mildew, blue mold rot as well as grape moths and mites.

Example 8

100 parts of methyl methacrylate, 20 parts of hydroquinone, 1 part of Chinalphos, 1 part of Phormothion, 1 part of Deltametrine, and 1 part of Chloropropylate were heated at 105°C for one hour and 40 parts of ground oil shale was added (particle size 10 μm), then cooled and mixed with 5 to 6% of emulsifier (25 EtO) and 0.01% of wetting agent (Likovet®).

The solution was diluted to a concentration of 1% and sprayed on apple trees by conventional apparatus between July and September, at least 3 times.

It was found that the calcium and magnesium content of apple increased, the structure of the fruits was harder and the storage period could be extended by 3 to 4 months. The fruits were free of insects and fungi.

Example 9

10 parts of methyl methacrylate, 2 parts of Triadimephon, 2 parts of hydroquinone, 4 parts of Permetrine, 1 part of Tetrametrine, 5 parts of Benomyl, 1 part of Chloropropylate and 10 parts of Chinalphos were heated at 110°C and cooled, 5% of known emulsifier (Lutazol® AT 25 or alurin sulfate) and 0.01% of Likovet® wetting agent were added.

1 to 1.5% aqueous dilution of the mixture was applied on potato leaves by a 200 l/h sprayer. The treatment controlled the Phytosphora infection which is surprising as the Benomyl alone does not show the same effect. The potato leaves turned deep green.

Example 10

To the active material of Example 9 Baysilon® PL silicon emulsifier was added and the mixture was diluted with water to 1 to 2% prior to spraying. Due to the silicon film formed on the surface of potato leaves, the Colorado beetle, which is freqqently landing on potato plants and punctures the leaf surface before destruction, cannot deposit the virus on the leaf.

Example 11
Comparative experiment

The mixture of Example 1 was prepared but the heat transmission was omitted.

From the mixture completed with emulsifier and wetting agent, 0.5 and 1% aqueous solutions were prepared. The composition thus obtained was sprayed on fruit trees against vegetative fungal diseases and insect pests. The growth of powdery mildew and perononspora and scobbing could be observed on the foliage surface. Placing "scrapings" from the trunk and branch on growth medium and treating as in the preceding Examples, growth of parasitic fungi could be observed after 3 days.

The spray killed only 20% of insects und 5% of mites. Repeating the spraying after two weeks with the same composition, control of powderly mildew was observed, growth of peronospora and parasitic fungi, however, remained unchanged, 10 to 15% of the insects were killed.

Example 12
Comparative experiment

The process of Example 4 was repeated but without energy transmission 0.4 to 0.5% solution was prepared from the mixture and sprayed on the surface of vine-leaves. The growth of powdery mildew was inhibited but peronospora and blue mold rot injuries remained uneffected 30 to 40% of mites become paralysed but recovered in a few hours, 20% destruction of grape-berry moths was observed.

Example 13
Comparative experiment

The process of Example 1 was repeated but without heating the solution. The material was sprayed on the cordon surface before budding and samples were taken from the Eutypa-infected dead tissues whih were placed on growth medium. After 48 hours intensive growth of Eutypa and Cytospora cyncta was observed.

Formation of malformed and strongly chlorophyll-defective leaves were also observed which were not regenerated. No effect on Eutypa could be detected.

Example 14
Dressing

To the mixture of Example 6, 3% of casein or ethyl acetate were added. The material was diluted to 15% and evenly applied on the surface of wheat or corn grain in seed-dressor. 1 to 2 days after sowing the grains were sprouting and in 2 to 3 days the sprouts emerged from the soil. Sprouting of corn started at 5 to 6°C soil temperature and the sprouts emerged in a few days.

Carrying out the dressing with the same mixture which had been prepared by omitting the energy transmission, sprouting and emerging was delayed by at least 8 to 10 days.

Example 15

The process of Example 14 was repeated but adding 0.2% of lindane and leaving out the casein and acetates. The seed-grains were dressed in a fluidization mixer with the above solution.

The treated cereal grains were sprouting in 1 to 2 days and emerged after 3 to 4 days. The plants were removed after one month and proved to have a rich root in contrary to the plants emerged from seeds having been dressed by conventional methods. The cereals dressed and sown by this way grew green earlier and were more drought-resistant.

Example 6

The mixture of 15 parts of methyl methacrylate, 2 parts of hydroquinone, 5 parts of quinine hydrochloride, 1 part of Chinalphos, 1 part of Deltametrin and 2 parts of Benomyl was heated at 110°C for one hour and then stirred to a homogeneous mixture. The 2% aqueous mixture was sprayed on pine, aspen and oak. It was observed that the deers did not nibble off the top of pines, the fungi occurring on the infected aspen and oak surfaces were localized, and, depending on the amount of the spray applied, the insects were killed, in some cases even in a depth of 2 to 3 mm.

Example 17

The mixture of 20 parts of methyl methacrylate, 2 parts of hydroquinone 5 parts of Benomyl, 1 part of Captan, 1 part of Deltametrine and 0.2 part of beta-indolyl butyric acid was heated at 105°C for one hour and stirred to a homogeneous mixture with known emulsifiers and wetting agents. The mixture was sprayed on alfalfa and sunflower in a dilution of 0.3 to 2%. The mixture provided a protection against leaf mildew of alfalfa and lodging of sunflower. By regular spraying, head rotting of sunflower could be eliminated. The wounds caused by aphids recovered without infection, the aphids themselves were killed.

Example 18

The mixture of 18 parts of methyl methacrylate, 6 parts of Benomyl, 2 parts of Thiadimephon, 2 parts of hydroquinone, 1 part of alfa-naphthyl acetic acid and 0.5 parts of beta-indolyl butyric acid was heated at 110°C for one hour, then cooled and mixed with emulsifiers and wetting agents to homogeneous material, which was diluted to a concentration of 0.4 to 1%.

At the end of September or in October, when spraying along with the top-dressing of wheat, winter barley and rye, the mass of roots increased, at least by 50% compared with the controls. The number of leaves and chlorophyll content increased as well. As control, the basic active materials were used.

Example 19

In a reactor provided with a stirrer, 15 parts of methyl methacrylate, 3 parts of Benomyl, 1 part of Captan, 1 part of Folpet, 2 parts of Methidathion

7

and 1 part of Deltametrine were placed. The stirring was accomplished with nitrogen gas. In the reactor double-walled quartz sound enclosing a 340 to 390 nm (3400 to 3900 Å) quartz bulb was placed. The quartz bulb was switched on and the solution was stirred by nitrogen stream and cooled for 1/2 hour.

The composition can be used for dressing corn, wheat and alfalfa grains. After dressing the grains should simply be dried and the conventional covering with casein may be eliminated. The starch in the grain is bound to the composition through the OH-groups, thus providing protection against soil infections.

Example 20

The mixture of 20 parts of methyl methacrylate, 5 parts of Captafol, 3 parts of Benomyl, 1 part of Thiadimephon, 1 part of Deltametrine, 5 parts of Chinalphos and 2 parts of hydroquinone was stirred with hydrogen gas. The reactor was cooled and exposed to 4 MHz laser rays for 30 minutes. After 30 minutes the irradiation was stopped and the mixture was cooled.

The mixture was diluted to a concentration of 0.1 to 1% and sprayed against apple scobbing, fungal diseases of potato, leafblight and potato-rot with excellent results.

Example 21

The mixture of 15 parts of methyl methacrylate, 1 part of beta-indolyl butyric acid, 1 part of gibberellic acid, 2 parts of hydroquinone, 3 parts of Chinalphos, 1 part of Deltametrine and 5 parts of oil shale was heated at 105°C for 1/2 hour. After cooling to 70°C a blend of wax and paraffin made at 70°C was mixed thereto and/or a 20% mixture was formed with vulcanizing silicon rubber. Before tubing, a known organic tin catalyst was added to the silicon rubber and sealed. The composition may be used at vine budding and grafting of fruit trees for covering the wounded or grafting surfaces, and eliminates the fungal infections on the reproductive material.

**Claims**

1. A process for preparing a substance for the treatment and/or prevention of plant diseases and/or for regulating the plant growth and/or for enhancing the ion supply of plants and/or wild repellant characterized in that one or more active compounds for plant treatment are contacted with an alkyl methacrylate, preferably methyl methacrylate and a cross-linking inhibiting agent (inhibitor) by heating, UV, and/or laser irradiation, and if desired the product thus obtained (active substance) is diluted with water, wherein the ratio of the active compound, alkyl methacrylate and inhibitor is 1:0.9—10:0.8—10.

2. The process according to Claim 1 characterized in that as inhibitor hydroquinone is used.

3. The process according to Claims 1 or 2 characterized in that the heating, UV or laser irradiation is accomplished by stirring.

4. The process according to any of Claims 1 to 3, characterized in that the active compound, alkyl methacrylate and inhibitor are mixed and heated at 100 to 130°C, preferably for 0.5 to 3 hours.

5. The process according to any of Claims 1 to 3, characterized in that the mixture of the active compound, alkyl methacrylate and inhibitor is treated with UV-light for 5 to 40 minutes at 10 to 80°C.

6. The process according to any of Claims 1 to 3, characterized in that the stirring is accomplished by bubbling nitrogen or carbon dioxide gas through the mixture.

7. The process according to any of Claims 1 to 3, characterized in that the mixture of the active compound, alkyl methacrylate and inhibitor is treated with laser rays.

8. The process according to any of Claims 1 to 7, characterized in that the fungicidal active compound is selected from the group consisting of phtalimido derivatives, dithiocarbamates, disulfides, heterocyclic compounds, preferably benzimidazoles and triazines.

9. The process according to Claim 8, characterized in that the fungicidal active compound is selected from the group consisting of Zineb, Maneb, Mankozeb, Metiram, Metam, Propineb, TMTD, Ditalmimphos, Folpet, Captafol, Captan, Bitertanol, Benomyl, Bupirimat, 4-butyl-4H-1,2,4-triazine, Dichlorbutrazol, Dithianon, Dodemorph, Ethirimol, Fenarimol, Fuberidazole, Hymexazol, Iprodion, Carbendazim, Carboxin, Chinomethionat, Nuarimol, 8-oxi-chinolin-sulphate, Pirohophos, Procymidon, copper-oxyquinolate, Triadimophon, Triadimenol, Tridemorph, triphorin, Vinchlozolin, Zymoxanyl, Dichlofluanid, Dinocap, Dodine, Ephosite-Al, Fentin acetate, Fentin hidroxide, Chlorothalonil, Methalaxyl, Nitrothal-isopropyl, Polyoxin-B, Thiophanat-methyl, Dodemorph, Bitertanol, Ephosit, Chlorothalonil, Cymoxanyl, Mantozeb, Dichlorofluanid, Captan, Malathion, Dithalimphos and Dichlobutrazol.

10. The process according to any of Claims 1 to 7, characterized in that the insecticidal active compound is selected from the group consisting of chlorinated hydrocarbons, phosphonic acid esters, phosphoric acid esters, thiophosphoric acid derivatives, dithiophosphoric acid derivatives, salycylic acid esters, thiolderivatives, carbamates and pyrethroids.

11. The process according to Claim 10, characterized in that the insecticidal active compound selected from the group consisting of Endosulfan, Dienochlor, Kelevan, Lindan, Toxaphen, Butonate, Dichlorvos, Fonofos, Phosamidon, Heptenophos, Chlorfenvinphos, Mevinphos, Monocrotophos, Trichlorfon, Bromophos, Diazinon, Phenitrothion, Fenthion, Chinalfos, Chlorpiriphos, Tetrachlorvinphos, Methyl parathion, Pirimiphosmethyl, Triazophos, Dimethoat, Phenthoat, Phormothion, Phosalone, Phosmet, Malathion, Metidathion, Methylaziphos, Prothoat, Sulfotepp, Terbuphos, Phorate, Thiometon, Aldicarb, Dioxacarb, Carbaryl, Carbofuran, Mercaptodimethur, Methomyl, Oxamyl, Pirimicarb, Bioresmetrin, Zipermetrin, Deltametrin, Phenvalerate, Phthalthrin, Tetrametrin, Pirethrin, Neopyramin, Pormethrin, DNOC, kartap, Pirimiphos-methyl, Terbuphos, Dazomet, Diflubenzuron, Thiocyclam, Propoxur, Fenazox, Metamidophos, Pirimicarb and Methylparathion.

12. The process according to any of Claims 1 to 7, characterised in that the acaricidal active compound is selected from the group consisting of Dinobuton, Tetrasul, Formothion, Dimethoate, Thiometon, Malathion, Phosphothion, Fenthion, Tetradiphon, Zihexathin, Fenbutatin oxide, Chlorpropylate and Amitrase.

13. The process according to any of Claims 1 to 7, characterized in that the plant growth regulator is selected from the group consisting of Etephon, gibberellic acid, N-phenyl-phtalanic acid, alfanaphtyl acetic acid and beta-indolyl butyric acid.

14. The process according to any of Claims 1 to 7 for preparing wild repellant, characterized in that as active compound at least one quinine salt, preferably hydrochloride is used.

15. The process according to any of Claims 1 to 7 for preparing dressing compositions, characterized in that as active compound one or more of the chemicals listed in Claims 8 to 13 used.

16. A composition for plant treatment comprising an agent prepared according to Claim 1.

17. The composition according to Claim 16 characterized in that the active compound is selected from the group consisting of dithiocarbamates, disulfides, heterocyclic compounds and phtalimido derivatives.

18. The composition according to any of the Claims 16 and 17 characterized in that the active compound is selected from the group consisting of Zineb, Maneb, Mankozeb, Metiram, Metam; Propineb, TMTD, Ditalmimphos, Folpet, Captafol, Captan, Bitertanol, Benomyl, Bupirimet, 4-butyl-4H-1,2,4-traizine, Dichlorbutrazol, Dithianon, Dodemorph, Ethirimol, Fenarimol, Fuberidazole, Hymexazol, Iprodion, Carbendazim, Carboxin, Chinomethionat, Nuarimol, 8-oxi-chinolin-sulphate, Pirozophos, Procymidon, copper-oxyquinolate, Triadimophon, Triadimenol, Tridemorph, triphorin, Vinchlozolin, Zymoxanyl, Dichlofluanid, Dinocap, Dodine, Ephosite-Al, Fentin acetate, Fentin hidroxide, Chlorothalonil, Methalaxyl, Nitrothalisopropyl, Polyoxin-B, Thiophenat-methyl, Dodemorph, Bitertanol, Ephosit, Chlorothalonil, Cymoxanyl, Mantozeb, Dichlofluanid, Captan, Malathion, Dithalimphos and Dichlobutrazol.

19. The composition according to any of Claims 16 characterized in that the insecticidal active compound is selected from the group consisting of chlorinated hydrocarbons, phosphonic acid esters, phosphoric acid esters, thiophosphoric acid derivatives, dithiophosphoric acid derivatives, salycylic acid esters, thiol derivatives, carbamates and pyrethroids.

20. The composition according to Claim 16 characterized in that the acaricidal active compound is selected from the group consisting of Dinobuton, Tetrasul, Formothion, Dimethoate, Thiometon, Malathion, Phosphothion, Fenthion, Tetradiphon, Zihexathin, Fenbutatin oxide, Chlorpropylate and Amitrase.

21. The composition according to Claim 16 characterized in that the plant growth regulating active compound is selected from the group consisting of Etephon, gibberellic acid, N-phenyl phtalanic acid, alfa-naphtyl acetic acid and beta-indolyl butyric acid.

22. The composition according to Claim 16 characterized in that the repellant active compound is at least one quinine salt, preferably hydrochloride and sulfate.

23. The composition according to any of Claims 16 to 22, characterized by containing additional auxiliaries, preferably emulsifiers, wetting agents, diluants, and microelement sources.

24. The composition according to any of Claims 16 to 22, characterized by containing the microelements magnesium, iron, zinc, manganese, boron, copper, molybdenum and cobalt, optionally in the form of salt or chelate thereof.

25. Process for treating plants, characterized in that a composition of any of Claims 16 to 24 is applied on the surface of plant by conventional methods so that to cover at least 5 to 19% of the said plant.

**Patentansprüche**

1. Verfahren zur Herstellung einer Substanz für die Behandlung und/oder Vorbeugung von Pflanzenkrankheiten und/oder zur Regulation des Pflanzenwachstums und/oder zur Verstärkung der Ionenzufuhr an Pflanzen und/oder ein Abwehrmittel gegen Wild, dadurch gekennzeichnet, daß eine oder mehrere aktive Verbindung(en) für die Behandlung von Pflanzen mit einem Alkylmethacrylat, vorzugsweise mit Methylmethacrylat, und einem vernetzenden inhibierenden Mittel (Inhibitor) unter Erwärmen, UV-Bestrahlung und/oder Laserbestrahlung in Kontakt gebracht werden und, sofern gewünscht, das so erhaltene Produkt (aktive Substanz) mit Wasser verdünnt wird, worin das Verhältnis von aktiver Verbindung zu Alkylmethacrylat und Inhibitor 1:0,9 bis 10:0,8 bis 10 beträgt.

2. Verfahren nach Anspruch 1, dadurch gekennzeichnet, daß als Inhibitor Hydrochinon verwendet wird.

3. Verfahren nach Ansprüchen 1 oder 2, dadurch gekennzeichnet, daß das Erwärmen, die Bestrahlung mit UV-Licht oder die Laserbestrahlung unter Rühren erfolgt.

4. Verfahren nach einem der Ansprüche 1 bis 3, dadurch gekennzeichnet, daß die aktive Verbindung, das Alkylmethacrylat und der Inhibitor gemischt und auf 100 bis 130°C, vorzugsweise für eine Zeitdauer von 0,5 bis 3 Stunden, erwägmt werden.

5. Verfahren nach einem der Ansprüche 1 bis 3, dadurch gekennzeichnet, daß die Mischung aus aktiver Verbindung, Alkylmethacrylat und Inhibitor bei 10 bis 80°C 5 bis 40 Minuten lang mit UV-Licht behandelt wird.

6. Verfahren nach einem der Ansprüche 1 bis 3, dadurch gekennzeichnet, daß das Rühren dadurch bewirkt wird, daß man Stickstoff- oder Kohlendioxidgas durch die Mischung blubbern läßt.

7. Verfahren nach einem der Ansprüche 1 bis 3, dadurch gekennzeichnet, daß die Mischung von aktiver Verbindung, Alkylmethacrylat und Inhibitor mit Laserstrahlen behandelt wird.

8. Verfahren nach einem der Ansprüche 1 bis 7, dadurch gekennzeichnet, daß die fungizide aktive Verbindung ausgewählt ist aus der Gruppe Phthalimid-Derivate, Dithiocarbamate, Disulfide, heterocyclische Verbindungen, vorzugsweise Benzimidazole und Triazine.

9. Verfahren nach Anspruch 8, dadurch gekennzeichnet, daß die fungizide aktive Verbindung ausgewählt ist aus der Gruppe Zineb, Maneb, Mankozeb, Metiram, Metam, Propineb, TMTD, Ditalmimphos, Folpet, Captafol, Captan, Bitertanol, Benomyl, Bupirimat, 4-Butyl-4H-1,2,4-triazin, Dichlorbutrazol, Dithianon, Dodemorph, Ethirimol, Fenarimol, Fuberidazol, Hymexazol, Iprodion, Carbendazim, Carboxin, Chinomethionat, Nuarimol, 8-Oxichinolinsulfat, Pirohophos, Procymidon, Kupferoxychinolat, Triadimophon, Triadimenol, Tridemorph, Triphorin, Vinchlozolin, Zymoxanyl, Dichlofluanid, Dinocap, Dodine, Ephosite-Al, Fentinacetat, Fentinhydroxid, Chlorothalonil, Methalaxyl, Nitrothalisopropyl, Polyoxin-B, Thiophanatmethyl, Dodemorph, Bitertanol, Ephosit, Chlorthalonil, Cymoxanyl, Mantozeb, Dichlorfluanid, Captan, Malathion, Dithalimphos und Dichlobutrazol.

10. Verfahren nach einem der Ansprüche 1 bis 7, dadurch gekennzeichnet, daß die insektizide aktive Verbindung ausgewählt ist aus der Gruppe chlorierte Kohlenwasserstoffe, Phosphonsäureester, Phosphorsäureester, Thiophosphorsäure-Derivate, Dithiophosphorsäure-Derivate, Salicylsäureester, Thiol-Derivate, Carbamate und Pyrethroide.

11. Verfahren nach Anspruch 10, dadurch gekennzeichnet, daß die insektizide aktive Verbindung ausgewählt ist aus der Gruppe Endosulfan, Dienochlor, Kelevan, Lindan, Toxaphen, Butonat, Dichlorvos, Fonofos, Phosamidon Heptenophos, Chlorfenvinphos, Mevionphos, Monocrotophos, Trichlorfon, Bromophos, Diazinon, Phenitrothion, Fenthion, Chinalfos, Chlorpiriphos, Tetrachlorvinphos, Methylparathion, Pirimiphosmethyl, Triazophos, Dimethoat, Phenthoat, Phormothion, Phosalone, Phosmet, Malation, Metidathion, Methylaziphos, Prothoat, Sulfotepp, Terbuphos, Phorat, Thiometon, Aldicarb, Dioxacarb, Carbyl, Carbofuran, Mercaptodimethur, Methomyl, Oxamyl, Pirimicarb, Bioresmetrin, Zipermetrin, Deltametrin, Phenvalerat, Phtalthrin, Tetrametrin, Pirethrin, Neopyramin, Pormethrin, DNOC, Kartap, Pirimiphosmethyl, Terbuphos, Dazomet, Diflubenzuron, Thiocyclam, Propoxur, Fenazox, Metamidophos, Pirimicarb und Methylparathion.

12. Verfahren nach einem der Ansprüche 1 bis 7, dadurch gekennzeichnet, daß die acarizide aktive Verbindung ausgewählt ist aus der Gruppe Dinobuton, Tetrasul, Formothion, Dimethoat, Thiometon, Malathion, Phosphothion, Fenthion, Tetradiphon, Zihexathin, Fenbutatinoxid, Chlorpropylat und Amitrase.

13. Verfahren nach einem der Ansprüche 1 bis 7, dadurch gekennzeichnet, daß der Pflanzenwachstums-Regulator ausgewählt ist aus der Gruppe Etephon, Gibberellinsäure, N-Phenylphthalaninsäure, alpha-Naphthylessigsäure und beta-Indolylbuttersäure.

14. Verfahren nach einem der Ansprüche 1 bis 7 zur Herstellung eines Abwehrmittels gegen Wild, dadurch gekennzeichnet, daß als aktive Verbindung wenigstens ein Chininsalz, vorzugsweise ein Hydrochlorid, verwendet wird.

15. Verfahren nach einem der Ansprüche 1 bis 7 zur Herstellung von Beizzusammensetzungen, dadurch gekennzeichnet, daß als aktive Verbindung eine oder mehrere der chemische Stoffe verwendet werden, die in den Ansprüchen 8 bis 13 aufgelistet wurden.

16. Zusammensetzung für die Behandlung von Pflanzen, umfassend ein Mittel, das gemäß Anspruch 1 hergestellt wurde.

17. Zusammensetzung nach Anspruch 16, dadurch gekennzeichnet, daß die aktive Verbindung ausgewählt ist aus der Gruppe Dithiocarbamate, Disulfide, heterocyclische Verbindungen und Phthalimid-Derivate.

18. Zusammensetzung nach einem der Ansprüche 16 und 17, dadurch gekennzeichnet, daß die aktive Verbindung ausgewählt ist aus der Gruppe Zineb, Maneb, Mankozeb, Metiram, Metam, Propineb, TMTD, Ditalmimphos, Folpet, Captafol, Captan, Bitertanol, Benomyl, Bupirimet, 4-Butyl-4H-1,2-triazin, Dichlorbutrazol, Dithianon, Dodemorph, Ethirimol, Fenarimol, Fuberidazol, Hymexazol, Iprodion, Carbendazim, Carboxin, Chinomethionat, Nuarimol 8-Oxichinolinsulfat, Pirozophos, Procymidon, Kupferoxychinolat, Triadimophon, Triadimenol, Tridemorph, Triphorin, Vinchlozolin, Zymoxanyl, Dichlofluanid, Dinocap, Dodine, Ephosite-Al, Fentinacetat, Fentinhydroxid, Chlorthalonil, Methalaxyl, Nitrothalisopropyl, Polyoxin-B, Thiophenatmethyl, Dodemorph, Bitertanol, Ephosit, Chlorthalonil, Cymoxanyl, Mantozeb, Dichlofluanid, Captan, Malathion, Dithalimphos und Dichlobutrazol.

19. Zusammensetzung nach einem der Ansprüche 16 bis 18, dadurch gekennzeichnet, daß die insektizide aktive Verbindung ausgewählt ist aus der Gruppe chlorierte Kohlenwasserstoffe, Phosphonsäureester, Phosphorsäureester, Thiophosphorsäure-Derivate, Dithiophosphorsäure-Derivate, Salicylsäureester, Thiol-Derivate, Carbamate und Pyrethroide.

20. Zusammensetzung nach Anspruch 16, dadurch gekennzeichnet, daß die acarizide aktive Verbindung ausgewählt ist aus der Gruppe Dinobuton, Tetrasul, Formothion, Dimethoat, Thiometon, Malathion, Phosphothion, Fenthion, Tetradiphon, Zihexathin, Fenbutatinoxid, Chlorpropylat und Amitrase.

21. Zusammensetzung nach Anspruch 16, dadurch gekennzeichnet, daß die aktive, das Pflanzenwachstum regulierende Verbindung ausgewühlt ist aus der Gruppe Etephon, Gibberellinsäure, N-Phenylphthalaninsäure, alpha-Naphthylessigsäure und beta-Indolylbuttersäure.

22. Zusammensetzung nach Anspruch 16, dadurch gekennzeichnet, daß die aktive Abwehrverbindung wenigstens ein Chininsalz ist, vorzugsweise Hydrochlorid und Sulfat.

23. Zusammensetzung nach einem der Ansprüche 16 bis 22, dadurch gekennzeichnet, daß sie zusätzlich Hilfsstoffe, vorzugsweise Emulgatoren, Feuchthaltemittel, Verdünnungsmittel und Spurenelement-Quellen enthält.

24. Zusammensetzung nach einem der Ansprüche 16 bis 22, dadurch gekennzeichnet, daß sie die Spurenelemente Magnesium, Eisen, Zink, Mangan, Bor, Kupfer, Molybdän und Kobalt, gegebenenfalls in Form von deren Salz oder Chelat, enthält.

25. Verfahren zur Behandlung von Pflanzen, dadurch gekennzeichnet, daß eine Zusammensetzung nach einem der Ansprüche 16 der 24 mittels herkömmlicher Methoden auf die Oberfläche von Pflanzen aufgebracht wird, sodaß sie wenigstens 5 bis 19% der Pflanze bedeckt.

**Revendications**

1. Procédé de préparation d'une substance pour le traitement et/ou la prévention de certaines maladies des plantes et/ou pour la régulation de la croissance des plantes et/ou le renforcement de l'apport en ions et/ou un probuit répulsif pour les animaux sauvages caractérisé en ce que l'un ou plusieurs des composés actifs pour le traitement des plantes est ou sont mis en relation avec un mélange de méthacrylate d'alkyle ou mieux de méthacrylate de méthyle et d'un agent inhibiteur de réticulation (inhibiteur) par chauffe, irradiation par UV et/ou par laser et éventuellement, le produit ainsi obtenu (la substance active) est diluée dans l'eau en respectant les proportions suivantes de composé actif, méthacrylate d'alkyle et inhibiteur:1:0,9—10:0,8—10.

2. Procédé selon la revendication 1, caractérisé en ce que l'hydroquinone est utilisée comme inhibiteur.

3. Procédé selon les revendications 1 ou 2, caractérisé en ce que la chauffe, l'irradiation par UV ou par laser est effectuée sous agitation.

4. Procédé selon l'une quelconque des revendications 1 à 3, caractérisé en ce que le composé actif, le méthacrylate, d'alkyle et l'inhibiteur sont mélangés et portés à une température de 100 à 130°C, de préférence pendant une durée de 0,5 à 3 heures.

5. Procédé selon l'une quelconque des revendications 1 à 3, caractérisé en ce que le mélange du composé actif, du méthacrylate d'alkyle et de l'inhibiteur est soumis à une lumière ultra-violette pendant 5 à 40 minutes et à une température de 10 à 80°C.

6. Procédé selon l'une quelconque des revendications 1 à 3, caractérisé en ce que l'agitation est assurée par insufflation de fines bulles d'azote ou de dioxyde de carbone dans le mélange.

7. Procédé selon l'une quelconque des revendications 1 à 3, caractérisé en ce que le mélange du composé actif, du méthacrylate d'alkyle et de l'inhibiteur est soumis à un traitement par rayons laser.

8. Procédé selon l'une quelconque des revendications 1 à 7, caractérisé en ce que le composé actif fongicide est choisi parmi les produits appartenant au groupe des dérivés de phtalimide, dithiocarbamates, disulfures, composés hétérocycliques, de préférence des benzimidazoles et des triazines.

9. Procédé selon la revendication 8, caractérisé en ce que le composé actif fongicide est choisi parmi les produits appartenant au groupe des Zineb, Maneb, Mankozeb, Métiram, Métam, Propineb, TMTD, Ditalmimphos, Folpet, Captafol, Captan, Bitertanol, Bénomyl Bupirimat, 4-butyl-4H-1,2,4-triazine, Dichlorbutrazol, Dithianon, Dodémorph Ethirimol, Fénarimol, Fuberidazole, Hymexazol, Iprodion, Carbendazim, Carboxin, Chinométhionat, Nuarimol, 8-oxy-quinoléine-sulfate, Pirohophos, Procymidon, oxyquinolate de cuivre, Triadimophon, Triadiménol, Tridémorph, triphorin, Vinchlozolin, Zymoxanyl, Dichlofluanid, Dinocap, Dodine, Ephosite-Al, acétate de Fentin, hydroxyde de Fentin, Chlorothalonil, Méthalaxyl, Nitrothal-isopropyl, Polyoxin-B, Thiophanatméthyle, Dodémorph, Bitertanol, Ephosit, Chlorothalonil, Cymoxanyl, Mantozeb, Dichofluanid, Captan, Malathion, Dithalimphos et Dichlobutrazol.

10. Procédé selon l'une quelconque des revendications 1 à 7, caractérisé en ce que le composé actif insecticide est choisi parmi les produits appartenant au groupe des hydrocarbures chlorés, esters d'acide phosphonique, esters d'acide phosphorique, dérivés d'acide thiophosphorique, dérivés d'acide dithiophosphorique, esters d'acide salicylique, dérivés de thiol, carbamates et pyréthroïdes.

11. Procédé selon la revendication 10, caractérisé en ce que le composé actif insecticide est choisi parmi les produits appartenant au groupe des Endosulfan, Dienochlor, Kelevan, Lindan, Toxaphen, Butonate, Dichlorvos, Fonofos, Phosamidon, Hepténophos, Chlorfenvinphos, Mévinphos, Monocrotophos, Trichlorfon Bromophos, Diazinon, Phénithrothion, Fenthion, Chinalfos, Chlorpiriphos, Tétrachlorvinphos, parathion de méthyle, Pirimiphos-méthyle, Triazophos, Dimétoat, Phenthoat, Phormothion, Phosalone, Phosmet, Malathion, Métidathion, Méthylaziphos, Prothoat, Sulfotepp, Terbuphos, Phorate, Thiométon, Aldicarb, Dioxacarb, Carbaryl, Carbofuran, Mercaptodiméthur, Méthomyl, Oxamyl, Pirimicarb, Bioresmétrin, Zipermétrin, Deltamétrin, Phenvalérate, Phtalthrin, Tétramétrin, Piréthrin, Néopyramin, Porméthrin, DNOC, kartap, Pirimiphosméthyle, Terbuphos, Dazomet, Diflubenzuron, Thiocyclam, Propoxur, Fénazox, Métamidophos, Pirimicarb et Méthyleparathion.

12. Procédé selon l'une quelconque des revendications 1 à 7, caractérisé en ce que le composé actif acaricide est choisi parmi les produits appartenant au groupe des Dinobuton, Tétrasul, Formothion, Diméthoate, Thiométon, Malathion, Phosphothion, Fenthion, Tétradiphon, Zihexathin, oxyde de Fenbutatine, Chlorpropylate et Amitrase.

13. Procédé selon l'une quelconque des revendications 1 à 7, caractérisé en ce que le régulateur de la croissance des plantes est choisi parmi les produits appartenant au groupe est Etephon, acide gibberellique, acide N-phényl-phthalamique, acide alpha-naphtyl-acétique et acide bêta-indolyl-butyrique.

14. Procédé selon l'une quelconque des revendications 1 à 7, caractérisé en ce qu'il recourt à au moins un sel de quinine et de préférence à du chlorhydrate comme composé actif pour la préparation du produit répulsif pour les animaux sauvages.

15. Procédé selon l'une quelconque des revendications 1 à 7, caractérisé en ce qu'il recourt à un ou plusieurs des produits chimiques énumérés aux revendications 8 à 13 comme composé actif pour la préparation des produits de désinfection ou de traitement.

16. Composition pour le traitement des plantes comprenant un agent préparé selon la revendication 1.

17. Composition selon la revendication 16, caractérisée en ce que le composé actif est choisi parmi les produits appartenant au groupe des dithiocarbamates, disulfures, composés hétérocycliques et dérivés phtalimido.

18. Composition selon l'une quelconque des revendications 16 et 17, caractérisée en ce que le composé actif est choisi parmi les produits appartenant au groupe des Zineb, Maneb, Mankozeb, Métiram, Métam, Propineb, TMTD, Ditalmimphos, Folpet, Captafol, Captan, Bitertanol, Bénomyl, Bupirimat 4-butyl-4H-1,2,4-triazine, Dichlorbutrazol, Dithianon, Dodémorph, Ethirimol, Fénarimol, Fuberidazole, Hymexazol, Iprodion, Carbendazim, Carboxin, Chinométhionat, Naurimol, 8-oxy-quinoléinesulfate, Pirozophos, Procymidon, oxyquinolate de cuivre, Triadimophon, Triadiménol, Tridémorph, triphorin, Vinchlozolin, Zymoxanyl, Dichlofluanid, Dinocap, Dodine, Ephosite-Al, acétate de Fentin, hydroxyde de Fentin, Chlorothalonil, Méthalaxyl, Nitrothal-isopropyl, Polyoxin-B, Thiophénat-méthyle, Dodémorph, Bitertanol, Ephosit, Chlorothalonil, Cymoxanyl, Mantozeb, Dichofluanid, Captan, Malathion, Dithalimphos et Dichlorbutrazol.

19. Composition selon la revendication 16, caractérisée en ce que le composé actif insecticide est choisi parmi les produits appartenant au groupe des hydrocarbure chlorés, esters d'acide phosphonique, esters d'acide phosphorique, dérivés d'acide thiophosphorique, dérivés d'acide dithiophosphorique, esters d'acide salicylique, dérivé du thiol, carbamates et pyréthroïdes.

20. Composition selon la revendication 16, caractérisé en ce que le composé actif acaricide est choisi parmi les produits appartenant au groupe des Dinobuton, Tétrasul, Formothion, Diméthoate, Thiométon, Malathion, Phosphothion, Fenthion, Tétradiphon, Zihexathin, oxyde de Fenbutatine, Chlorpropylate et Amitrase.

21. Composition selon la revendication 16, caractérisée en ce que le composé actif régulateur de la croissance des plantes est choisi parmi les produits appartenant au groupe est Etephon, acide gibberellique, acide N-phényl-phthalamique, acide alpha-naphtyl-acétique et acide bêta-indolyl-butyrique.

22. Composition selon la revendication 16, caractérisée en ce que le composé actif du produit répulsif pour les animaux sauvages est au moins un sel de quinine et de préférence un chlorhydrate et un sulfate.

23. Composition selon l'une quelconque des revendications 16 à 22, caractérisée en ce qu'elle contient des substances auxiliaires additionnelles, de préférence des émulsifiants, agent mouillants, diluants et sources d'oligoéléments.

24. Composition selon l'une quelconque des revendications 16 à 22, caractérisée en ce qu'elle contient les oligoéléments magnésium, fer, zinc, manganèse, bore, cuivre, molybdène et cobalt, éventuellement sous forme de sel ou de chélate.

25. Procédé de traitement des plantes, caractérisé en ce qu'une composition selon l'une quelconque des revendications 16 à 24 est appliquée sur la surface des plantes à traiter par des méthodes classiques et de manière à couvrir au moins de 5 à 19% de la plante concernée.